(19) Europäisches Patentamt / European Patent Office / Office européen des brevets

(11) **EP 1 741 745 B1**

(12) **EUROPEAN PATENT SPECIFICATION**

(45) Date of publication and mention
of the grant of the patent:
**14.05.2008 Bulletin 2008/20**

(51) Int Cl.:
*C08L 9/00* *(2006.01)*   *C08L 7/00* *(2006.01)*
*C08L 21/00* *(2006.01)*   *B60C 1/00* *(2006.01)*
*C08K 7/02* *(2006.01)*   *C08K 13/04* *(2006.01)*

(21) Application number: **06012186.0**

(22) Date of filing: **13.06.2006**

(54) **Rubber composition for tire tread and pneumatic tire comprising the same**

Gummizusammensetzung für Reifenlaufflächen und Luftreifen, der diese enthält

Composition de caoutchouc pour bande de roulement et pneumatique comprenant celle-ci

(84) Designated Contracting States:
**DE FR GB SE**

(30) Priority: **28.06.2005 JP 2005188580**

(43) Date of publication of application:
**10.01.2007 Bulletin 2007/02**

(73) Proprietor: **SUMITOMO RUBBER INDUSTRIES LIMITED**
**Kobe-shi,**
**Hyogo-ken (JP)**

(72) Inventor: **Minagoshi, Akira**
**cho 3-chome,**
**Chuo-ku**
**Kobe-shi**
**Hyogo-ken (JP)**

(74) Representative: **Manitz, Finsterwald & Partner GbR**
**Postfach 31 02 20**
**80102 München (DE)**

(56) References cited:
**EP-A- 1 288 022**     **EP-A- 1 505 112**
**EP-A1- 1 297 973**     **EP-A2- 1 172 406**

**Description**

The present invention relates to a rubber composition for a tire tread and a pneumatic tire comprising the same.

For running on the surface of an icy and snowy road, spike tires have been used and tires have been mounted with chains, however, environmental problems such as dust are caused; therefore, studless tires were developed as tires for running on the surface of an icy and snowy road instead of them.

Since an icy and snowy road surface is remarkably low in friction coefficient compared with a general road surface and is slippery, thus, devices in terms of materials and design are made on a studless tire. For example, a rubber composition compounding a diene rubber excellent in low temperature property is developed. Further, devices for improving friction performance on ice (performance on ice) etc have been tried by increasing surface edge components by changing the state of unevenness on a tire surface or compounding an inorganic filler having scratching effect (see JP-A-2003-105131) and the like to obtain the scratching effect on ice on the surface of a snowy and icy road.

However, sufficient performance on ice is not obtained even though the above-mentioned studless tires are used compared with spike tires, and further improvement is required.

EP 1 505 112 A1 discloses a rubber composition for a tire comprising 0.5 to 30 parts by weight of a filler having at least two protuberances based on 100 parts by weight of diene rubber.

EP 1 288 022 relates to a tire comprising a raw material derived from a non-petroleum resource in an amount of at least 75 % by weight based on the total weight of the tire, wherein the raw material derived from a non-petroleum resource preferably includes an inorganic filler, a biofiller, a vegetable oil or a natural fiber.

EP 1 297 973 A1 describes a rubber composition comprising 2 to 30 parts by weight of staple fibers having an average fiber diameter of 10 to 100 $\mu$m and an average fiber length of 0.01 to 4 mm and 1 to 10 parts by weight of particles having a Moh's hardness of at least 5 and an average particle size of at most 500 $\mu$m based on 100 parts by weight of a diene rubber.

EP 1 172 406 A2 discloses a rubber composition for a tire tread comprising a diene rubber, glass fibers, a reinforcing agent and 1 to 15 parts by weight of inorganic powder and/or silicone rubber powder.

An object of the present invention to provide a pneumatic tire having extremely excellent performance on ice and a rubber composition for a tire tread capable of preparing the same.

The present invention relates to a rubber composition for a tire tread comprising 0.5 to 15 parts by weight of a nonmetallic fiber having an average fiber diameter of 1 to 100 $\mu$m and an average length of 0.1 to 5 mm and 0.5 to 30 parts by weight of a powder of eggshell based on 100 parts by weight of a diene rubber.

The rubber composition for a tire tread preferably further comprises 0.5 to 30 parts by weight of a filler having a plurality of protrusions.

In the rubber composition for a tire tread, the total amount of the nonmetallic fiber, the powder of eggshell and the filler having a plurality of protrusions is preferably at most 30 parts by weight.

The pneumatic tire of the present invention preferably comprises the rubber composition for a tire tread.

Fig. 1 is a diagram showing the state of the nonmetallic fiber and the powder of eggshell in the rubber composition for a tire tread of the present invention.

Fig. 2 is a diagram showing the state of the nonmetallic fiber, the powder of eggshell and the filler having at least 2 protrusions in the rubber composition for a tire tread of the present invention.

Fig. 3 is a illustration diagram showing the angle X of a line which connects the edge of a protrusion with the center (inflection point) of the filler in the filler having at least 2 protrusions used for the present invention.

The rubber composition for a tire tread of the present invention comprises a rubber component, a nonmetallic fiber and a powder of eggshell.

As the diene rubber, an arbitrary diene rubber is used. For example, diene rubbers such as a natural rubber (NR), an polyisoprene rubber (IR), various kinds of polybutadiene rubbers (BR), various kinds of styrene-butadiene rubbers (SBR), an acrylonitrile-butadiene copolymer rubber (NBR), a butyl rubber (IIR), a halogenated butyl rubber and a polychloroprene (CR) can be used alone or by blending them at an arbitrary ratio. However, it is preferable to use NR and BR as the diene rubber in the viewpoint of the excellent balance among low temperature property, processability, durability etc.

Examples of the nonmetallic fiber in the present invention are nonmetallic inorganic fibers such as a glass fiber and a carbon fiber and nonmetallic organic fibers such as a polyester fiber, a nylon fiber and an aromatic polyamide fiber. Among these, a nonmetallic inorganic fiber is particularly preferable as the nonmetallic fiber since there is no risk of damaging a road surface, micro scratching effect to ice on the snowy and icy road surface can be further expressed, and it is broken at a suitable length in a process of kneading a rubber to be easily dispersed and oriented.

The average fiber diameter of the nonmetallic fiber is at least 1 $\mu$m and preferably at least 3 $\mu$m. When the average fiber diameter is less than 1 $\mu$m, fibers oriented to the direction of a thickness cannot sufficiently produce a portion having a high ground pressure on the rubber surface due to a small sectional area of the fibers. Further, the average fiber diameter is at most 100 $\mu$m, preferably at most 50 $\mu$m, and more preferably at most 40 $\mu$m. When the average fiber diameter is more than 100 $\mu$m, adherence and adhesion friction do not sufficiently work since an action of pushing out a water film which is generated between the snowy and icy road surface and tires is inferior.

The average length of the nonmetallic fiber is at least 0.1 mm. When the average length is less than 0.1 mm, fibers drop out easily from the rubber surface and the effect of pushing out a water film is lowered. Further, the average length is at most 5 mm and preferably at most 3 mm. When the average length is longer than 5 mm, the fibers are hardly dispersed and oriented, and processability of a rubber is lowered. Further, the average length of the nonmetallic fiber refers to the average length of the nonmetallic fiber after kneading.

The amount of the nonmetallic fiber is at least 0.5 part by weight based on 100 parts by weight of the diene rubber, and preferably at least 1 part by weight. When the compounding amount of the nonmetallic fiber is less than 0.5 part by weight, an amount of fibers forming a ground pressure on the rubber surface decreases, and effects of removing a water film and scratching ice are not sufficiently obtained. Further, the amount of the nonmetallic fiber is at most 15 parts by weight and preferably at most 10 parts by weight. When the compounding amount of the nonmetallic fiber exceeds 15 parts by weight, rigidity is too high and the rubber surface cannot follow the snowy and icy road surface, thus, adherence and adhesion friction tend to be lowered.

Compounding a powder of eggshell in the rubber composition allows to form micro protrusions on the surface of the rubber as well as the nonmetallic fiber, thereby, functions such as removing a water film generated between the snowy and icy road surface and tires and exerting the effect of micro scratching on ice are shown.

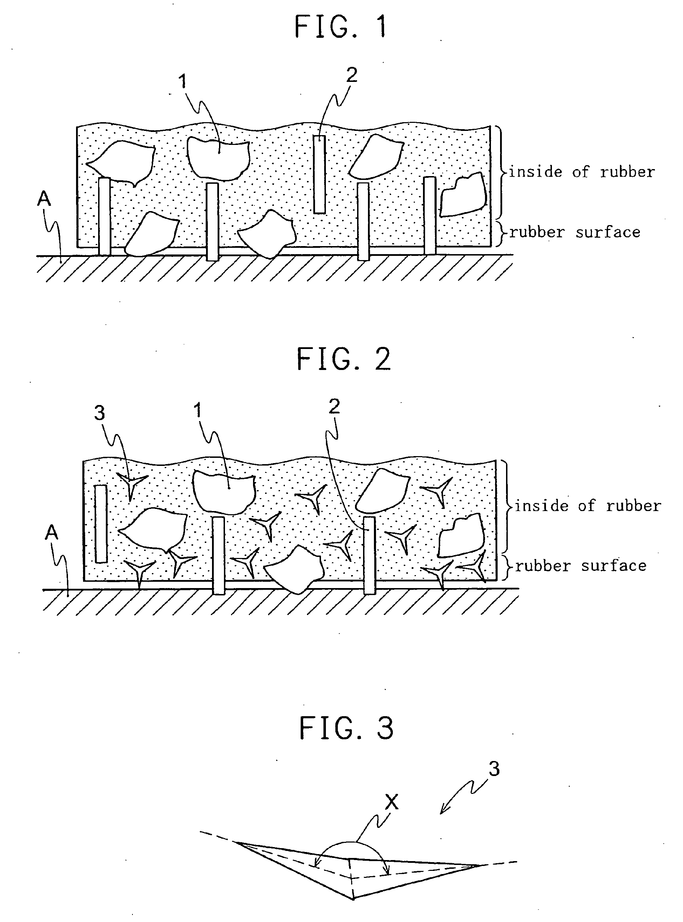

Further, compounding a powder of eggshell with a large particle diameter allows to prevent the nonmetallic fibers from pushing into the rubber inside when the nonmetallic fiber is bleed out on the rubber surface and brought in contact with ground as shown in Fig. 1, thereby, frictional resistance by scratching can be more effectively obtained.

Further, compounding the filler having a plurality of protrusions together with the powder of eggshell with a large particle diameter according to the necessity allows to prevent the nonmetallic fiber from pushing into the rubber inside when the filler having a plurality of protrusions bleeds out on the rubber surface together with the nonmetallic fiber and brought in contact with the ground, thereby, frictional resistance by scratching can be more effectively obtained as shown in Fig. 2.

When the powder of eggshell is compounded in the rubber composition, there are obtained four effects such that the powder of eggshell itself scratches a snowy and icy road surface, fine porous existing in the powder of eggshell absorb and remove water, pores generated by dropping the powder of eggshell absorb and remove water, and the rim of the fine porous generated by dropping the powder of eggshell functions as edges to scratch the snowy and icy road surface. Thus, for improving the performance on ice, the effect of removing moisture by fine porous existing in the powder of eggshell or fine porous generated by dropping the powder of eggshell is largely caused together with the scratching effect.

The particle diameter of the powder of eggshell is preferably at least 1 $\mu$m, more preferably at least 5 $\mu$m, and further preferably at least 10 $\mu$m. When the particle diameter of the powder of eggshell is less than 1 $\mu$m, there is a tendency that pushing the powder of eggshell into the rubber inside can not be prevented. Further, the particle diameter of the powder of eggshell is preferably at most 200 $\mu$m and more preferably at most 150 $\mu$m. When the particle diameter of the powder of eggshell exceeds 200 $\mu$m, abrasion resistance tends to be lowered.

The amount of the powder of eggshell is at least 0.5 part by weight based on 100 parts by weight of the diene rubber and preferably at least 1 part by weight. When the compounding amount of the powder of eggshell is less than 0.5 part by weight, sufficient performance on ice can not be obtained for the reason that an amount is small based on the nonmetallic fiber and pushing the nonmetallic fiber in the rubber inside can not be prevented. Further, the amount of the powder of eggshell is at most 30 parts by weight based on 100 parts by weight of the diene rubber, and preferably at most 15 parts by weight. When the amount of the nonmetallic fiber exceeds 30 parts by weight, there are tendencies that dispersion is deteriorated at kneading with the rubber and abrasion resistance is lowered.

When amounts of the nonmetallic fiber and the powder of eggshell are set as X and Y respectively, it is preferable to satisfy the following equation.

$$2X + Y \leq 30$$

By specifying the compounding amount as above, performance on ice and durability such as abrasion resistance can be compatible with excellent balance. When (2X + Y) exceeds 30, durability such as abrasion resistance may tends to be inferior.

The rubber composition for a tire tread of the present invention preferably further comprises a filler having a plurality of protrusions (having at least 2 protrusions). At least 2 protrusions exhibit an anchor effect by compounding the filler having at least 2 protrusions, which prevents drop-out by stimulation and friction during running and produces micro protrusions from the rubber surface to express the effect of eliminating a water film which is generated between the snowy and icy road surface and tires and the effect of scratching. Further, in the present invention, the filler shows excellent effects in abrasion property, heat resistance, thermal conductivity etc.

Further, since the nonmetallic fiber in the rubber extruded by a calendar roll is oriented to an extrusion direction, in order to effectively express the scratching effect by fibers on ice, it has been required to use specific processes (equipments) such as a process of cutting a sheet vertical to an extrusion direction to be set up and a process in which fibers are oriented to the direction vertical to the extrusion direction by making an extrusion head as a tube type, the sheet is cut in parallel to the extrusion direction, the cut sheets are respectively rotated by 90 degrees to be laminates together, thereby, the sheets are oriented to the direction of a tread thickness. However, since the fiber is disturbed to orient the direction of extruding the rubber by compounding the nonmetallic fiber with the rubber together with the filler having at least 2 protrusions, the present invention can sufficiently obtain the scratching effect on ice by the nonmetallic fiber without using the specific processes (equipments) in producing tires.

The number of the protrusion of the filler is at least 2 and preferably at least 3. In case of a filler having no protrusion or a filler having only one protrusion, the filler cannot show the anchor effect and the filler is easily dropped out by stimulation and friction by tire running and the like.

Herein, the number of the protrusion of at least 2 is defined that angle X of a line which connects the edge of a protrusion with the center (inflection point) of the filler is less than 180 degrees as shown in Fig. 3. The angle X is 180 degrees for the filler having only one protrusion and a linear filler such as fibers corresponds to this definition.

Examples of the filler are zinc oxide whisker (for example, PANA-TETRA (tetrapod-shaped zinc oxide single crystal) available from Matsushita Electric Industrial Co., Ltd.) and star sands made in Okinawa Prefecture. Among these, zinc oxide whisker is preferably used because it is a material harder than ice and softer than asphalt.

The compounding amount of the filler is preferably at least 0.5 part by weight based on 100 parts by weight of the diene rubber, more preferably at least 1 part by weight, and further preferably at least 5 parts by weight. When the compounding amount of the filler is less than 0.5 part by weight, the performance on ice on a snowy and icy road surface does not tend to be improved. Further, the amount of the filler is preferably at most 30 parts by weight and more preferably at most 20 parts by weight. When the amount of the filler exceeds 30 parts by weight, abrasion resistance tends to be lowered.

Further, in order to improve the adhesive force of the filler with the diene rubber, the surface of the filler may be treated with a polypropylene (PP), polyethylene (PE), polystyrene (PS), polyurethane (PU), polyvinyl alcohol (PVA), a silane coupling agent, a silylating agent and the like.

When amounts of the nonmetallic fiber, the powder of eggshell and the filler having at least 2 protrusions are represented as X, Y and Z respectively, it is preferable to satisfy the following equation.

$$2X + Y + Z \leq 30$$

Thus, the performance on ice and durability such as abrasion resistance can be compatible with excellent balance by specifying the compounding amounts. When (2X + Y + Z) exceeds 30, durability such as abrasion resistance tends to be inferior.

In the rubber composition for a tire tread of the present invention, various compounding agents and additives, which are compounded in a rubber composition for a tire or a general rubber composition, such as other reinforcing agents (filler), a vulcanizer (crosslinking agent), a vulcanization accelerator, various oils, an antioxidant, a softening agent, a plasticizer and a coupling agent can be compounded in addition to the diene rubber, the nonmetallic fiber, the powder of eggshell and the filler having at least 2 protrusions. Further, the compounding amounts of these compounding agents and additives may be general amounts.

An example of the reinforcing agent is an inorganic filler such as silica.

The compounding amount of the inorganic filler is preferably at most 150 parts by weight based on 100 parts by weight of the diene rubber, and more preferably at most 100 parts by weight. When the compounding amount of the inorganic filler exceeds 150 parts by weight, processability tends to be poor. Further, the compounding amount of the inorganic filler is preferably at least 5 parts by weight.

When silica is compounded, a silane coupling agent is preferably used in combination. The compounding amount of the silane coupling agent is preferably at least 1 part by weight based on 100 parts by weight of the silica, and more preferably at least 2 parts by weight. When the amount of the silane coupling agent is less than 1 part by weight, the viscosity of the unvulcanized rubber composition tends to be high. Further, the compounding amount of the silane coupling agent is preferably at most 20 parts by weight based on 100 parts by weight of the silica, and more preferably at most 15 parts by weight. When the compounding amount of the silane coupling agent exceeds 20 parts by weight, effect of compounding the silane coupling agent is small for the compounding amount, and it tends to cost high.

Further, an example of the reinforcing agent is carbon black. The amount of carbon black is preferably at least 5 parts by weight based on 100 parts by weight of the diene rubber, and more preferably at least 10 parts by weight. When the compounding amount of carbon black is less than 5 parts by weight, sufficient reinforcing effect can not be obtained and abrasion resistance tends to be inferior. The compounding amount of carbon black is preferably at most 150 parts by weight and more preferably at most 100 parts by weight. When the compounding amount of carbon black exceeds 150 parts by weight, processability becomes poor and hardness becomes high; thus, the performance on ice tends to be lowered.

When an oil is compounded, the compounding amount of the oil is preferably at least 5 parts by weight based on 100 parts by weight of the diene rubber, and more preferably at least 10 parts by weight. When the compounding amount of the oil is less than 5 parts by weight, hardness is not lowered and the performance on ice tends to be lowered. Further, the compounding amount of the oil is preferably at most 100 parts by weight and more preferably at most 70 parts by weight. When the compounding amount of the oil exceeds 100 parts by weight, abrasion resistance tends to be lowered.

An example of the vulcanizer is sulfur. The compounding amount of sulfur is preferably at least 0.2 part by weight based on 100 parts by weight of the diene rubber, and more preferably at least 0.5 parts by weight. When the compounding amount of sulfur is less than 0.2 part by weight, crosslinking density is low and strength does not tends to be obtained. Further, the compounding amount of sulfur is preferably at most 10 parts by weight and more preferably at most 4 parts by weight. When the compounding amount of sulfur exceeds 10 parts by weight, the performance on ice tends to be lowered due to increasing hardness along with rising a crosslinking density.

When the vulcanization accelerator is compounded, the compounding amount of the vulcanization accelerator is preferably at least 0.1 part by weight based on 100 parts by weight of the diene rubber, and more preferably at least 1 part by weight. When the compounding amount of the vulcanization accelerator is less than 0.1 parts by weight, a vulcanization speed is slow and productivity tends to be lowered. Further, the compounding amount of the vulcanizing accelerator is preferably at most 10 parts by weight, and more preferably at most 5 parts by weight. When the compounding amount of the vulcanization accelerator exceeds 10 parts by weight, rubber scorch is caused and the physical property tends to be lowered.

The pneumatic tire of the present invention is prepared by a general process using the rubber composition of the present invention. Namely, an unvulcanized tire is formed by extrusion-processing the rubber composition of the present invention to which the additives are compounded if necessary in the unvulcanized stage adjusting with the shape of a tire tread and molding thereof on a tire molding machine by a general process. The pneumatic tire is obtained by heating and pressurizing the unvulcanized tire in a vulcanizer.

The pneumatic tire of the present invention is preferably a studless tire in particular.

EXAMPLES

The present invention is explained in detail based on Examples but is not limited thereto.

Raw materials used in Examples and Comparative Examples are collectively shown in the following.

Natural rubber: RSS#3 available from Tech Bee Tech Hung Co., Ltd.
Butadiene rubber: UBEPOL-BR150B available from Ube Industries, Ltd.
Carbon black: SHOWA BLACK N220 available from Showa Cabot K. K.
Silica: ULTRASIL VN3 available from Degussa Corporation.
Silane coupling Agent: Si69 (bis(3-triethoxysilylpropyl)tetrasulfide) available from Degussa Corporation.
Oil: DIANAPROCESS OIL available from Idemitsu Kosan Co., Ltd.
Wax: SUNNOC WAX available from Ouchi Shinko Chemical Industrial Co., Ltd.
Antioxidant: NOCRAC 6C (N-1,3-dimethylbutyl-N'-phenyl-p-phenylenediamine) available from Ouchi Shinko Chemical Industrial Co., Ltd..
Stearic acid: STEARIC ACID available from NOF Corporation.
Zinc flower: ZINC FLOWER No. 1 available from Mitsui Mining & Smelting Co., Ltd.
Glass fiber: Micro Chopped Strand (average fiber diameter: 11 $\mu$m, cut length: 3 mm) available from NSG VETROTEX Inc.
Powder of eggshell: powder of eggshell (average particle diameter: 100 $\mu$m) available from Q.P.EGG Corporation.
Zinc oxide whisker: PANA-TETRA (number of protrusions: 4) available from Matsushita Electric Industrial Co., Ltd.
Sulfur: Sulfur Powder available from Tsurumi Chemical Industry Co., Ltd.
Vulcanizing accelerator: NOCCELER CZ (N-cyclohexyl-2-benzothiazolylsulfenamide) available from Ouchi Shinko Chemical Industrial CO., LTD.

EXAMPLES 1 to 5 and COMPARATIVE EXAMPLES 1 to 7

The compounding components shown in Tables 1 and 2 except for sulfur and a vulcanization accelerator were kneaded for 3 to 5 minutes using an enclosed type Banbury mixer having a 1.7-litter capacity,, and at the time when a temperature reached at least 150°C, the compounded rubber was discharged to prepare a base kneaded rubber. A tread was formed by kneading the base kneaded rubber, sulfur and a vulcanization accelerator with an open roll and extruding the kneaded article in the shape of a tread with a calendar roll, and a tire having a size of 195/65R15 was prepared by laminating the tread with other tire parts and vulcanizing thereof.

The following tests were conducted on the obtained tire. The results are shown in Tables 1 and 2.

<Friction test on ice>

The tires were mounted on a domestically produced FR vehicle of 2,000 cc displacement and braking distances on ice board from a speed of 30 km/hr were measured. The brake stopping distances were respectively shown by indices (friction index on ice by using the following equation based on the braking distances), assuming the value of the brake stopping distance of Comparative Example 1 as 100. It is indicated that the larger the friction index on ice is, the more excellent the performance on ice is.

$$(Friction\ index\ on\ ice) = (braking\ distance\ in\ tire\ of\ Comparative$$

$$Example\ 1)/(brake\ stopping\ distance\ in\ respective\ tries) \times 100$$

(Abrasion test)

The tires were mounted on a domestically produced FR vehicle of 2,000 cc displacement and abrasion quantities after running 30,000 km were measured. The abrasion quantities were respectively shown by indices (abrasion resistance index) by using the following equation based on the abrasion quantities, assuming the value of the abrasion quantity of Comparative Example 1 to as 100. It is indicated that the larger the abrasion resistance index is, the more excellent the abrasion resistance is.

$$(Abrasion\ resistance\ index) = (Abrasion\ quantity\ in\ tire\ of\ Comparative$$

$$Example\ 1)/(Abrasion\ quantity\ in\ respective\ tires) \times 100$$

Test results are shown in Tables 1 and 2.

TABLE 1

|  | Ex. | | Com. Ex. | | | |
| --- | --- | --- | --- | --- | --- | --- |
|  | 1 | 2 | 1 | 2 | 3 | 4 |
| Amounts (part by weight) | | | | | | |
| Natural rubber | 60 | 60 | 60 | 60 | 60 | 60 |
| Butadiene rubber | 40 | 40 | 40 | 40 | 40 | 40 |
| Carbon black | 30 | 30 | 30 | 30 | 30 | 30 |
| Silica | 20 | 20 | 20 | 20 | 20 | 20 |
| Silane coupling agent | 2 | 2 | 2 | 2 | 2 | 2 |
| Oil | 20 | 20 | 20 | 20 | 20 | 20 |

(continued)

| Amounts (part by weight) | | | | | | |
|---|---|---|---|---|---|---|
| Wax | 2 | 2 | 2 | 2 | 2 | 2 |
| Antioxidant | 2 | 2 | 2 | 2 | 2 | 2 |
| Stearic acid | 2 | 2 | 2 | 2 | 2 | 2 |
| Zinc flower | 3 | 3 | 3 | 3 | 3 | 3 |
| Glass fiber (X) | 10 | 5 | - | 10 | - | 20 |
| Power of eggshell (Y) | 10 | 10 | - | - | 10 | 10 |
| 2X + Y | 30 | 20 | 0 | 20 | 10 | 50 |
| Sulfur | 1.5 | 1.5 | 1.5 | 1.5 | 1.5 | 1.5 |
| Vulcanization accelerator | 1.5 | 1.5 | 1.5 | 1.5 | 1.5 | 1.5 |
| Evaluation results | | | | | | |
| Average length of glass fiber after kneading (mm) | 0.5 | 0.5 | 0.5 | 0.5 | 0.5 | 0.5 |
| Performance on ice (index) | 128 | 122 | 100 | 110 | 107 | 132 |
| Abrasion resistance (index) | 86 | 89 | 100 | 95 | 96 | 74 |

TABLE 2

| | Ex. | | | Com. Ex. | | | | | |
|---|---|---|---|---|---|---|---|---|---|
| | 3 | 4 | 5 | 1 | 2 | 3 | 5 | 6 | 7 |
| Amounts (part by weight) | | | | | | | | | |
| Natural rubber | 60 | 60 | 60 | 60 | 60 | 60 | 60 | 60 | 60 |
| Butadiene rubber | 40 | 40 | 40 | 40 | 40 | 40 | 40 | 40 | 40 |
| Carbon black | 30 | 30 | 30 | 30 | 30 | 30 | 30 | 30 | 30 |
| Silica | 20 | 20 | 20 | 20 | 20 | 20 | 20 | 20 | 20 |
| Silane coupling agent | 2 | 2 | 2 | 2 | 2 | 2 | 2 | 2 | 2 |
| Oil | 20 | 20 | 20 | 20 | 20 | 20 | 20 | 20 | 20 |
| Wax | 2 | 2 | 2 | 2 | 2 | 2 | 2 | 2 | 2 |
| Antioxidant | 2 | 2 | 2 | 2 | 2 | 2 | 2 | 2 | 2 |
| Stearic acid | 2 | 2 | 2 | 2 | 2 | 2 | 2 | 2 | 2 |
| Zinc flower | 3 | 3 | 3 | 3 | 3 | 3 | 3 | 3 | 3 |
| Glass fiber (X) | 5 | 5 | 10 | - | 10 | - | - | 10 | - |
| Power of eggshell (Y) | 10 | 5 | 10 | - | - | 10 | - | - | 10 |
| Zinc oxide whisker (Z) | 10 | 10 | - | - | - | - | 10 | 10 | 10 |
| 2X + Y + Z | 30 | 25 | 30 | 0 | 20 | 10 | 10 | 30 | 20 |
| Sulfur | 1.5 | 1.5 | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 | 1.5 | 1.5 |
| Evaluation results | | | | | | | | | |
| Average length of glass fiber after kneading (mm) | 0.5 | 0.5 | 0.5 | 0.5 | 0.5 | 0.5 | 0.5 | 0.5 | 0.5 |
| Performance on ice (index) | 144 | 140 | 128 | 100 | 110 | 107 | 108 | 134 | 120 |
| Abrasion resistance (index) | 92 | 94 | 86 | 100 | 95 | 96 | 97 | 88 | 95 |

According to the present invention, a pneumatic tire having extremely excellent performance on ice without lowering abrasion resistance by comprising both of a nonmetallic fiber and a powder of eggshell, compared with a pneumatic tire containing respectively the nonmetallic fiber and the powder of eggshell alone, and rubber composition for a tire tread capable of preparing the same can be provided.

**Claims**

1. A rubber composition for a tire tread comprising 0.5 to 15 parts by weight of a nonmetallic fiber having an average fiber diameter of 1 to 100 $\mu$m and an average length of 0.1 to 5 mm, and 0.5 to 30 parts by weight of a powder of eggshell based on 100 parts by weight of a diene rubber.

2. The rubber composition for a tire tread of Claim 1 further comprising 0.5 to 30 parts by weight of a filler having a plurality of protrusions.

3. The rubber composition for a tire tread of Claim 1, wherein the total amount of the nonmetallic fiber, the powder of eggshell and the filler having a plurality of protrusions is at most 30 parts by weight.

4. A pneumatic tire comprising the rubber composition for a tire tread of Claim 1.

**Patentansprüche**

1. Kautschukzusammensetzung für eine Reifenlauffläche, welche 0,5 bis 15 Gewichtsteile einer nichtmetallischen Faser mit einem durchschnittlichen Faserdurchmesser zwischen 1 und 100 $\mu$m und mit einer durchschnittlichen Länge von 0,1 bis 5 mm sowie 0,5 bis 30 Gewichtsteile eines Pulvers von Eierschale bezogen auf 100 Gewichtsteile eines Dienkautschuks enthält.

2. Kautschukzusammensetzung für eine Reifenlauffläche nach Anspruch 1, des Weiteren enthaltend 0,5 bis 30 Gewichtsteile eines Füllstoffs mit einer Vielzahl von Vorsprüngen.

3. Kautschukzusammensetzung für eine Reifenlauffläche nach Anspruch 1, wobei die Gesamtmenge der nichtmetallischen Faser, des Pulvers von Eierschale und des Füllstoffs mit einer Vielzahl von Vorsprüngen maximal 30 Gewichtsteile beträgt.

4. Luftreifen enthaltend die Kautschukzusammensetzung für eine Reifenlauffläche nach Anspruch 1.

**Revendications**

1. Composition de caoutchouc pour une bande de roulement comprenant 0,5 à 15 parties en poids d'une fibre non métallique ayant un diamètre de fibre moyen de 1 à 100 $\mu$m et une longueur moyenne de 0,1 à 5 mm, et de 0,5 à 30 parties en poids d'une poudre de coquille d'oeuf par rapport à 100 parties en poids d'un caoutchouc diène.

2. Composition de caoutchouc pour une bande de roulement selon la revendication 1, comprenant en outre de 0,5 à 30 parties en poids d'une charge ayant une pluralité de protubérances.

3. Composition de caoutchouc pour une bande de roulement selon la revendication 1, dans laquelle la quantité totale de la fibre non métallique, de la poudre de coquille d'oeuf et de la charge ayant une pluralité de protubérances est d'au maximum 30 parties en poids.

4. Pneumatique comprenant la composition de caoutchouc pour une bande de roulement selon la revendication 1.

# FIG. 1

inside of rubber

rubber surface

# FIG. 2

inside of rubber

rubber surface

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003105131 A
- EP 1505112 A1
- EP 1288022 A
- EP 1297973 A1
- EP 1172406 A2